# FASCICULE DE BREVET EUROPEEN

(11) **EP 0 955 753 B1**
(45) Date de publication et mention de la délivrance du brevet: **24.05.2006**
(21) Numéro de dépôt: 99401098.1
(22) Date de dépôt: 05.05.1999
(51) Int. Cl.: H04L 27/20, G06K 7/08

(54) **Modulateur BPSK**
BPSK-Modulator
BPSK modulator

(30) Priorité: 06.05.1998 FR 9805985
(43) Date de publication de la demande: 10.11.1999
(73) Titulaire: STMicroelectronics S.A., 92120 Montrouge (FR)
(72) Inventeur: Enguent, Jean-Pierre, 83000 Toulon (FR); Legou, Thierry, 83000 Toulon (FR)
(74) Mandataire: Bentz, Jean-Paul

(56) Documents cités:
- EP-A- 0 706 151
- EP-A- 0 719 014
- WO-A-98/00808
- US-A- 4 417 219
- US-A- 5 153 583
- PATENT ABSTRACTS OF JAPAN vol. 098, no. 005, 30 avril 1998 (1998-04-30) & JP 10 013312 A (SONY CORP), 16 janvier 1998 (1998-01-16)

## Description

La présente invention concerne un circuit codeur BPSK.

Le transfert de données binaires par sauts de phase d'une porteuse, ou modulation "BPSK" (pour "Binary Phase Shift Keying"), est une technique bien connue constituant une alternative aux techniques de transfert de données par modulation d'amplitude ou modulation de fréquence. Il est par ailleurs courant que ces diverses techniques soient combinées, par exemple qu'une sous-porteuse modulée par sauts de phase soit utilisée comme signal de modulation de l'amplitude ou de la fréquence d'une porteuse principale.

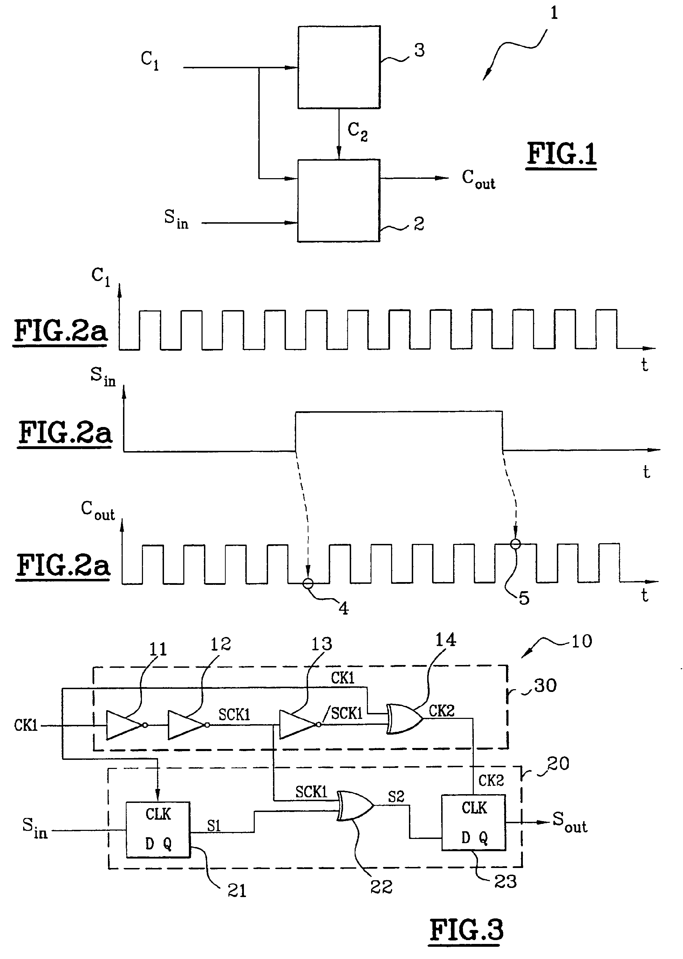

De façon classique, comme représenté schématiquement sur la figure 1, un codeur BPSK 1 comprend un circuit codeur 2 recevant en entrée un signal Sᵢₙ à coder, un signal porteur ou porteuse Ci, ainsi qu'un signal d'échantillonnage C2 ayant une fréquence au moins égale au double de la fréquence de la porteuse C1. Le signal d'échantillonnage C2 est délivré par un circuit 3 recevant la porteuse C1 en entrée. Le circuit codeur 2 délivre un signal de sortie Sₒᵤₜ codé par sauts de phase.

Pour fixer les idées, des exemples de signaux C1, Sᵢₙ et Sₒᵤₜ sont représentés sur les figures 2A, 2B, 2C. Le signal de sortie Sₒᵤₜ ressemble à celui de la porteuse C1 mais présente des sauts de phase 4, 5 après chaque changement de la valeur logique du signal à coder Sᵢₙ. De tels sauts de phase sont synchrones et se traduisent par le fait que le signal Sₒᵤₜ conserve pendant une demi-période la valeur logique qu'il présentait au cours de la demi-période précédente, au lieu de changer de valeur.

Bien que cette technique de codage soit avantageuse en raison notamment d'un bon rapport signal/bruit et d'une grande facilité de décodage, les codeurs BPSK classiques présentent l'inconvénient d'être complexes à réaliser. En particulier, le circuit 3 délivrant le signal d'échantillonnage C2 est classiquement réalisé à partir d'une boucle à verrouillage de phase PLL ("Phase Locked Loop") d'une certaine complexité, plus difficile à mettre en oeuvre qu'un circuit purement logique. Un tel circuit est divilgué dans la demande de brevet européen EP 0 853 291 A1 (SONY CORPORAT10N) 15.07.1998.

Ainsi, un objectif de la présente invention est de prévoir un circuit codeur BPSK qui soit simple à réaliser, performant, et d'un faible coût de revient.

Un autre objectif de la présente invention est de prévoir un circuit codeur BPSK réalisé exclusivement à partir de portes logiques classiques, pouvant être aisément intégré dans un microcircuit en silicium.

Ces objectifs sont atteints par la prévision d'un circuit codeur BPSK comprenant des premiers moyens pour produire, à partir d'un signal porteur et d'un signal binaire à coder fournis en entrée, un signal binaire de sortie présentant des sauts de phase synchrones représentatifs d'un changement de valeur du signal à coder, et des seconds moyens pour fournir aux premiers moyens un signal d'échantillonnage, dans lequel les seconds moyens comprennent : des moyens à retard pour délivrer un signal porteur décalé présentant relativement au signal porteur un décalage inférieur à la demi-période du signal porteur, et des moyens logiques pour combiner de façon logique le signal porteur et le signal porteur décalé et délivrer un signal d'échantillonnage binaire comportant au moins deux fronts montants ou descendants à chaque période du signal porteur.

Selon un mode de réalisation, les premiers moyens comprennent des moyens pour échantillonner le signal à coder au rythme des fronts montants, ou au rythme des fronts descendants du signal porteur décalé, et délivrer un signal à coder synchronisé.

Selon un mode de réalisation, les premiers moyens comprennent des moyens logiques pour délivrer un signal composite égal au signal porteur décalé ou au signal porteur décalé inversé selon la valeur logique du signal à coder synchronisé, et des moyens pour échantillonner le signal porteur composite au rythme des fronts montants, ou au rythme des fronts descendants du signal d'échantillonnage, et délivrer le signal binaire de sortie.

Selon un mode de réalisation, les moyens à retard comprennent au moins deux portes inverseuses en série.

Selon un mode de réalisation, les moyens logiques pour produire le signal d'échantillonnage comprennent une porte OU EXCLUSIF recevant sur une première entrée le signal porteur et sur une deuxième entrée le signal porteur décalé inversé.

Selon un mode de réalisation, les moyens pour délivrer un signal à coder synchronisé comprennent une bascule D recevant le signal porteur décalé sur son entrée d'horloge et le signal à coder sur son entrée D.

Selon un mode de réalisation, les moyens logiques pour délivrer le signal composite comprennent une porte OU EXCLUSIF recevant sur une première entrée le signal porteur décalé et sur une deuxième entrée le signal à coder synchronisé.

Selon un mode de réalisation, les moyens pour échantillonner le signal porteur composite comprennent une bascule D recevant le signal d'échantillonnage sur son entrée d'horloge et le signal porteur composite sur son entrée D.

La présente invention concerne également un microcircuit fonctionnant sans contact, comprenant une bobine d'antenne et des moyens interrupteurs pour moduler la charge de la bobine d'antenne, dans lequel les moyens interrupteurs sont pilotés par la sortie d'un circuit codeur selon l'invention.

La présente invention concerne également un objet portatif électronique comprenant un microcircuit selon l'invention.

Ces caractéristiques et les avantages de la présente invention seront exposés plus en détail dans la description suivante, faite à titre non limitatif, d'un mode de réalisation d'un circuit codeur selon l'invention, en relation avec les figures jointes parmi lesquelles :
- la figure 1 précédemment décrite représente sous forme de blocs l'architecture générale d'un circuit codeur BPSK,
- les figures 2A à 2C précédemment décrites représentent des signaux électriques illustrant le fonctionnement du codeur de la figure 1,
- la figure 3 est le schéma logique d'un circuit codeur BPSK selon l'invention,
- les figures 4A à 4H représentent divers signaux électriques illustrant le fonctionnement du circuit codeur selon l'invention, et
- la figure 5 illustre de façon schématique une application du circuit codeur selon l'invention à une transmission de données par couplage inductif.

La figure 3 représente un circuit codeur BPSK 10 selon l'invention, d'une structure particulièrement simple et réalisé à partir de portes logiques et de bascules classiques.

Le circuit 10 comprend un sous-ensemble codeur 20 comprenant une première bascule D 21, une porte OU EXCLUSIF 22 et une deuxième bascule D 23. Les bascules 21 et 23 sont de type synchrone et choisies ici pour se déclencher sur front montant de leurs entrées d'horloge CLK. La bascule 21 reçoit sur son entrée D un signal binaire à coder Sᵢₙ et reçoit sur son entrée d'horloge CLK un signal binaire CK1 utilisé en tant que porteuse. La sortie Q de la bascule 21 est appliquée sur une entrée de la porte 22 dont la sortie est appliquée sur l'entrée D de la bascule 23. La sortie Q de la bascule 23 délivre le signal de sortie Sₒᵤₜ du circuit codeur 10.

Au sous-ensemble codeur 20 est associé un sous-ensemble 30 comprenant trois portes ET 11, 12, 13 et une porte OU EXCLUSIF 14. Les portes 11 à 13 sont agencées en cascade. La sortie de la porte 12 est également appliquée sur la deuxième entrée de la porte 22 du sous-ensemble 20. La porte 14 reçoit sur sa première entrée la porteuse CK1 et sa deuxième entrée est connectée à la sortie de la porte 13. Enfin, la sortie de la porte 14 est appliquée sur l'entrée d'horloge CLK de la bascule 23 du sous-ensemble 20.

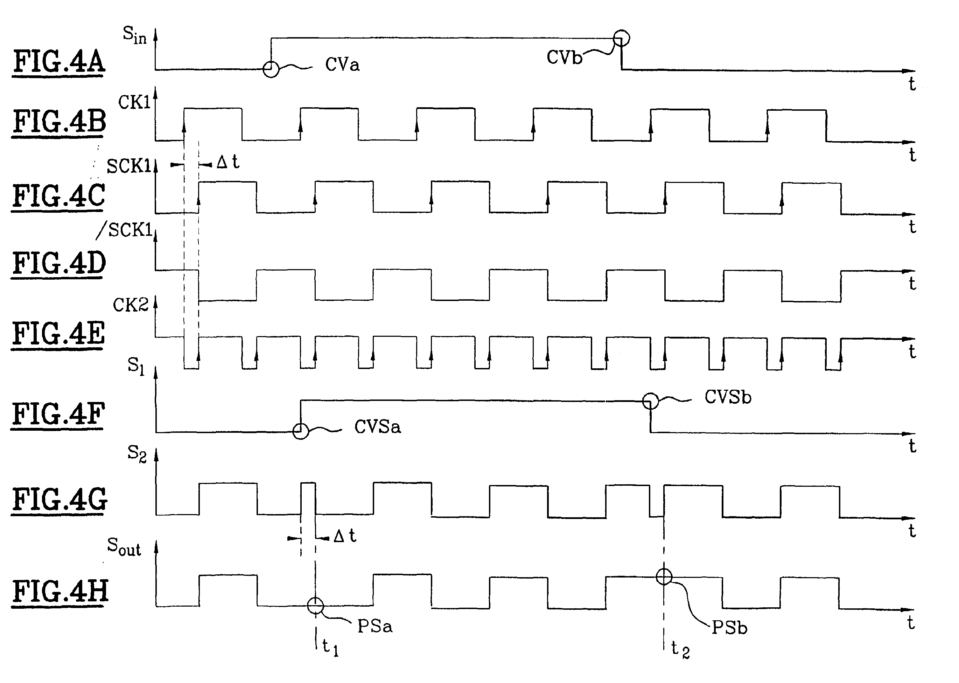

Les transistors formant les portes 11 et 12, par exemple des transistors MOS, sont dimensionnés de manière que les portes 11, 12 forment une ligne à retard offrant un retard de commutation Δt sensiblement inférieur à la demi-période de la porteuse CK1 (ou un retard multiple de la période de la porteuse offrant un décalage modulo 2II égal à Δt). Ainsi, on trouve à la sortie de la porte 12 un signal SCK1 décalé du retard Δt relativement à la porteuse CK1. Pour fixer les idées, les signaux CK1 et SCK1 sont représentés sur les figures 4B et 4C.

A la sortie de la troisième porte inverseuse 13, on trouve un signal décalé inversé /SCK1 représenté sur la figure 4D. Ainsi, la porte 14 délivre un signal d'échantillonnage CK2, représenté en figure 4E, qui passe à 0 quand les deux signaux CK1 et /SCK1 sont simultanément à la valeur 1, c'est-à-dire pendant la durée Δt. Le signal CK2 présente ainsi une fréquence d'oscillation égale au double de la fréquence de la porteuse CK1, et offre à chaque période de la porteuse CK1 deux fronts montants synchronisés avec les fronts montants et descendants du signal décalé SCK1.

Dans le sous-ensemble 20, la bascule 21 échantillonne le signal d'entrée Sin au rythme de la porteuse CK1 et délivre un signal synchronisé S1. La figure 4A donne un exemple de signal Sin et la figure 4F représente le signal synchronisé S1 correspondant. On voit que des variations CVa (passage à 1) et CVb (passage à 0) de la valeur logique du signal Sᵢₙ se retrouvent dans le signal S1 sous la forme de variations CVSa, CVSb synchronisées avec les fronts montants de la porteuse CK1.

Ainsi, la porte OU EXCLUSIF 22 délivre un signal composite S2, représenté en figure 4G, dont la valeur dépend du signal S1. Plus précisément, le signal S2 est égal au signal décalé SCK1 quand le signal Sin est à 0, ou au signal décalé inversé /SCK1 quand le signal Sin est à 1. On voit ainsi sur la figure 4G que la variation CVSa du signal S1 provoque de façon transitoire (c'est-à-dire pendant la durée Δt) le passage à 1 du signal S2 et son passage à 0 à un instant t1. Il apparaît que le signal S2 serait passé à 1 à cet instant t1 si le signal S1 était resté constant. Cet instant t1 correspond au moment où la bascule 23, pilotée par le signal CK2, échantillonne le signal S2. Ainsi, la conséquence du passage à 0 du signal S2 à l'instant t1 est que le signal de sortie Sₒᵤₜ, représenté sur la figure 4H, reste à 0 pour une demi-période supplémentaire au lieu de changer de valeur. L'instant t1 correspond ainsi à un premier saut de phase PSa du signal de sortie Sₒᵤₜ.

De façon semblable, la variation CVSb du signal S1 provoque de façon transitoire le passage à 0 du signal S2 et son passage à 1 à un instant t2 où le signal S2 serait passé à 0 si le signal S1 était resté constant. Ainsi, à l'instant t2, le signal de sortie Sₒᵤₜ reste à 1 pour une demi-période supplémentaire et présente un second saut de phase PSb.

En définitive, la présente invention permet de façon simple de délivrer un signal codé BPSK à partir d'un signal d'entrée Sᵢₙ qu'il n'est même pas nécessaire de synchroniser préalablement à la porteuse CK1. Il est bien évident toutefois que la bascule 21 ne serait pas nécessaire si le signal Sin était fourni synchronisé avec le signal porteur CK1.

Il apparaîtra clairement à l'homme de l'art que la présente invention est susceptible de diverses variantes de réalisation. La fonction des moyens de l'invention ayant été décrite, l'homme de l'art est par ailleurs en mesure de prévoir divers modes de réalisation équivalents. Par exemple, la porte OU EXCLUSIF 22 peut être remplacée par un circuit multiplexeur sélectionnant à sa sortie, en fonction de la valeur du signal S1, le signal décalé SCK1 délivré par la porte 12 ou le signal décalé inversé /SCK1 délivré par la porte 13. D'autre part, des bascules 21, 23 se déclenchant sur front descendant peuvent également être prévues moyennant une modification du circuit à la portée de l'homme de l'art.

Le circuit codeur BPSK qui vient d'être décrit, réalisé à partir de portes logiques et de bascules de type standard, se prête bien à une intégration dans une puce de silicium. Une application envisageable est notamment la transmission de données par couplage inductif et modulation de charge entre un microcircuit fonctionnant sans contact et un terminal.

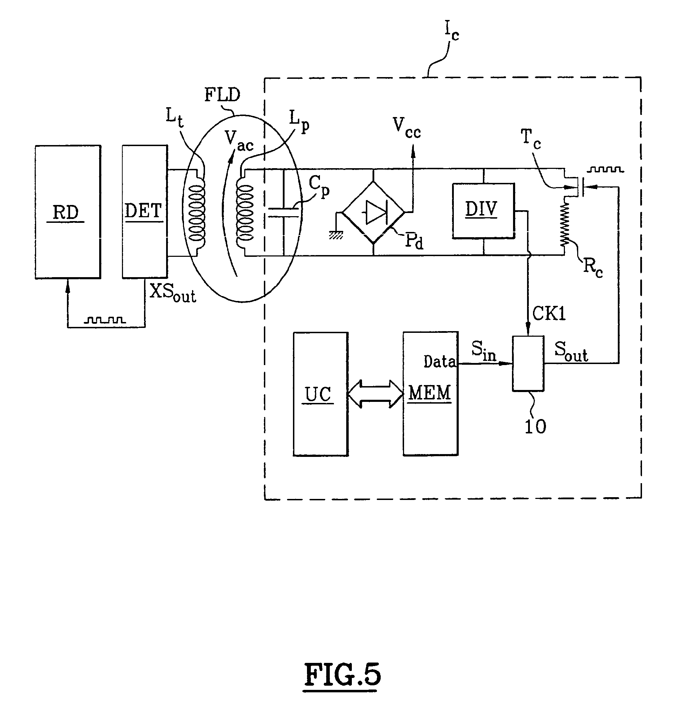

La figure 5 représente une telle application. On trouve sur cette figure un microcircuit IC fonctionnant par induction électromagnétique. Le microcircuit IC est par exemple agencé dans une carte à puce ou tout autre objet portatif électronique, comme une étiquette électronique, un porte-clefs électronique, etc.. Le microcircuit IC comprend une bobine d'antenne Lp formant avec une capacité Cp un circuit résonant inductif. Ce circuit résonnant LpCp est excité par un champ magnétique alternatif FLD émis par la bobine Lt d'une station RD, par exemple un lecteur de carte à puce sans contact.

Le microcircuit IC comprend un pont redresseur Pd pour redresser une tension Vac induite aux bornes de la bobine Lp et délivrer une tension d'alimentation Vcc. Le microcircuit IC comprend également une unité centrale UC, par exemple un microprocesseur, une mémoire MEM, un circuit diviseur DIV pour diviser la fréquence d'oscillation de la tension Vac, un circuit codeur 10 selon l'invention et, en parallèle avec la bobine Lp, un transistor Tc en série avec une résistance Rc.

Des données à transmettre à la station RD sont délivrées par une sortie série DATA de la mémoire MEM et envoyées dans le circuit codeur 10. Le circuit codeur reçoit comme signal porteur CK1 un signal délivré par le diviseur DIV. La fréquence du signal CK1 est ainsi un sous-multiple de la fréquence porteuse du champ magnétique FLD. Le signal Sₒᵤₜ, codé par sauts de phase, est appliqué sur le transistor Tc, qui se ferme et s'ouvre alternativement au rythme du signal Sₒᵤₜ. Chaque fermeture du transistor Tc modifie l'impédance de la bobine Lp et provoque une modulation de charge sur la bobine Lt de la station RD. La station RD est équipée d'un circuit DET de détection des modulations de charge, par exemple un détecteur de courant, de tension ou de phase, qui délivre un signal XSₒᵤₜ conforme au signal Sₒᵤₜ. Le signal XSₒᵤₜ est fourni à la station RD pour démodulation, ce qui permet à la station de retrouver les données Sᵢₙ envoyées par le microcircuit IC.

Ainsi, dans cette exemple d'application, la porteuse CK1 (devenant le signal Sₒᵤₜ après codage) est une sous-porteuse de modulation de charge extraite de la porteuse du champ magnétique FLD.

## Revendications

1. Circuit codeur BPSK (10) comprenant des premiers moyens (20) pour produire, à partir d'un signal porteur (CK1) et d'un signal binaire à coder (Sᵢₙ) fournis en entrée, un signal binaire de sortie (Sₒᵤₜ) présentant des sauts de phase synchrones (PSa, PSb) représentatifs d'un changement de valeur (CVa, CVb) du signal à coder (Sᵢₙ), et des seconds moyens (30) pour fournir aux premiers moyens (20) un signal d'échantillonnage (CK2), **caractérisé en ce que** les seconds moyens (30) comprennent :
- des moyens à retard (11, 12) pour délivrer un signal porteur décalé (SCK1) présentant relativement au signal porteur (CK1) un décalage (Δt) inférieur à la demi-période du signal porteur, et
- des moyens logiques (13, 14) pour combiner de façon logique le signal porteur (CK1) et le signal porteur décalé (SCK1) et délivrer un signal d'échantillonnage binaire (CK2) comportant au moins deux fronts montants ou descendants à chaque période du signal porteur (CK1).

2. Circuit selon la revendication 1, dans lequel les premiers moyens (20) comprennent des moyens (21) pour échantillonner le signal à coder (Sᵢₙ) au rythme des fronts montants, ou au rythme des fronts descendants du signal porteur décalé (SCK1), et délivrer un signal à coder synchronisé (S1).

3. Circuit selon l'une des revendications 1 et 2, dans lequel les premiers moyens (20) comprennent des moyens logiques (22) pour délivrer un signal composite (S2) égal au signal porteur décalé (SCK1) ou au signal porteur décalé inversé (/SCK1) selon la valeur logique du signal à coder synchronisé (S1), et
- des moyens (23) pour échantillonner le signal porteur composite (S2) au rythme des fronts montants, ou au rythme des fronts descendants du signal d'échantillonnage (CK2), et délivrer le signal binaire de sortie (Sₒᵤₜ).

4. Circuit selon l'une des revendications 1 à 3, dans lequel les moyens à retard comprennent au moins deux portes inverseuses (11, 12) en série.

5. Circuit selon l'une des revendications 1 à 4, dans lequel les moyens logiques pour produire le signal d'échantillonnage (CK2) comprennent une porte OU EXCLUSIF (14) recevant sur une première entrée le signal porteur (CK1) et sur une deuxième entrée le signal porteur décalé inversé (/SCK1).

6. Circuit selon l'une des revendications 2 à 5, dans lequel les moyens pour délivrer un signal à coder synchronisé (S1) comprennent une bascule D (21) recevant le signal porteur décalé (SCK1) sur son entrée d'horloge (CLK) et le signal à coder (Sᵢₙ) sur son entrée D.

7. Circuit selon l'une des revendications 3 à 6, dans lequel les moyens logiques pour délivrer le signal composite (S2) comprennent une porte OU EXCLUSIF (22) recevant sur une première entrée le signal porteur décalé (SCK1) et sur une deuxième entrée le signal à coder synchronisé (S1).

8. Circuit selon l'une des revendications 3 à 7, dans lequel les moyens pour échantillonner le signal porteur composite (S2) comprennent une bascule D recevant le signal d'échantillonnage (CK2) sur son entrée d'horloge (CLK) et le signal porteur composite (S2) sur son entrée D.

9. Microcircuit (IC) fonctionnant sans contact, comprenant une bobine d'antenne (Lp) et des moyens interrupteurs (Tc) pour moduler la charge de la bobine d'antenne, **caractérisé en ce que** les moyens interrupteurs (Tc) sont pilotés par la sortie d'un circuit codeur (10) selon l'une des revendications précédentes.

10. Objet portatif électronique comprenant un microcircuit (IC) selon la revendication 9.

## Claims

1. A BPSK encoding circuit (10) comprising first means (20) for the production, from a carrier signal (CK1) and a binary signal (Sᵢₙ) to be encoded that are given at input, of an output binary signal (Sₒᵤₜ) having synchronous phase shifts (PSa, PSb) representing a change in the value (CVa, CVb) of the signal (Sᵢₙ) to be encoded, and second means (30) to provide the first means (20) with a sampling signal (CK2), wherein the second means comprise:
- delay means (11, 12) to deliver a shifted carrier signal (SCK1) having a shift (Δt), with respect to the carrier signal (CK1), that is smaller than the half-period of the carrier signal, and
- logic means (13, 14) for the logic combination of the carrier signal (CK1) and the shifted carrier signal (SCK1) and for the delivery of a binary sampling signal (CK2) comprising at least two leading or trailing edges at each period of the carrier signal (CK1).

2. A circuit according to claim 1, wherein the first means (20) comprise means (21) to sample the signal to be encoded (Sᵢₙ) at the rate of the leading edges or at the rate of the trailing edges of the shifted carrier signal (SCK1), and to deliver a synchronized signal (S1) to be encoded.

3. A circuit according to one of the claims 1 or 2, wherein the first means (20) comprise logic means (22) to deliver a composite signal (S2) equal to the shifted carrier signal (SCK1) or to the inverted shifted carrier signal (/SCK1) depending on the logic value of the synchronized signal (S1) to be encoded, and signal (/SCK1) depending on the logic value of the synchronized signal (S1) to be encoded, and
- means (23) to sample the composite carrier signal (S2) at the rate of the leading edges or at the rate of the tailing edges of the sampling signal (CK2), and to deliver the output binary signal (Sₒᵤₜ).

4. A circuit according to one of the claims 1 to 3, wherein the delay means comprise at least two series-connected inverter gates (11, 12).

5. A circuit according to one of the claims 1 to 4, wherein the logic means for producing the sampling signal (CK2) comprise an XOR gate (14) receiving, at a first input, the carrier signal (CK1) and, at a second input, the inverted shifted carrier signal (/SCK1).

6. A circuit according to one of the claims 2 to 5, wherein the means for delivering a synchronized signal (S1) to be encoded comprise a D type flip-flop circuit (21) receiving the shifted carrier signal (SCK1) at its clock input (CLK) and the signal (Sᵢₙ) to be encoded at its D type input.

7. A circuit according to one of the claims 3 to 6, wherein the logic means for delivering the composite signal (S2) comprise an XOR gate (22) receiving, at a first input, the shifted carrier signal (SCK1) and, at a second input, the synchronized signal (S1) to be encoded.

8. A circuit according to one of the claims 3 to 7, wherein the means for sampling the composite carrier signal (S2) comprise a D type flip-flop circuit receiving the sampling signal (CK2) at its clock input (CLK) and the composite carrier signal (S2) at its D type input.

9. A microcircuit (IC) with contactless operation, comprising an antenna coil (Lp) and switch means (Tc) to means (Tc) are driven by the output of an encoder circuit (10) according to one of the preceding claims.

10. An electronic portable object comprising a microcircuit (IC) according to claim 9.

## Patentansprüche

1. BPSK-Codierschaltung (10) mit ersten Mitteln (20), um ausgehend von einem Trägersignal (CK1) und einem zu codierenden Binärsignal (Sᵢₙ), die am Eingang geliefert werden, ein binäres Ausgangssignal (Sₒᵤₜ) zu erzeugen, das synchrone Phasensprünge (PSa, PSb) aufweist, die repräsentativ sind für eine Wertänderung (CVa, CVb) des zu codierenden Signals (Sᵢₙ), sowie mit zweiten Mitteln (30), um den ersten Mitteln (20) ein Abtastsignal (CK2) zu liefern, **dadurch gekennzeichnet, dass** die zweiten Mittel (30) umfassen:
- Verzögerungsmittel (11, 12), um ein versetztes Trägersignal (SCK1) auszugeben, das relativ zum Trägersignal (CK1) einen Versatz (Δt) aufweist, der kleiner ist als die Halbperiode des Trägersignals, und
- logische Mittel (13, 14), um in logischer Weise das Trägersignal (CK1) und das versetzte Trägersignal (SCK1) zu kombinieren und ein binäres Abtastsignal (CK2) auszugeben, das zumindest zwei ansteigende bzw. abfallende Flanken bei jeder Periode des Trägersignals (CK1) aufweist.

2. Schaltung nach Anspruch 1, wobei die ersten Mittel (20) Mittel (21) umfassen, um das zu codierende Signal (Sᵢₙ) im Takt der ansteigenden Flanken bzw. im Takt der abfallenden Flanken des versetzten Trägersignals (SCK1) abzutasten und ein zu codierendes synchronisiertes Signal (S1) auszugeben.

3. Schaltung nach einem der Ansprüche 1 und 2, wobei die ersten Mittel (20) logische Mittel (22) umfassen, um ein zusammengesetztes Signal (S2) auszugeben, das gleich dem versetzten Trägersignal (SCK1) bzw. gleich dem invertierten versetzten Trägersignal (/SCK1) je nach logischem Wert des zu codierenden synchronisierten Signals (S1) ist, sowie
- Mittel (23) zum Abtasten des zusammengesetzten Trägersignals (S2) im Takt der ansteigenden Flanken bzw. im Takt der abfallenden Flanken des Abtastsignals (CK2) und zum Ausgeben des binären Ausgangssignal (Sₒᵤₜ).

4. Schaltung nach einem der Ansprüche 1 bis 3, wobei die Verzögerungsmittel zumindest zwei invertierende Gates (11, 12) in Reihe umfassen.

5. Schaltung nach einem der Ansprüche 1 bis 4, wobei die logischen Mittel zum Erzeugen des Abtastsignals (CK2) ein EXCLUSIVE-OR-Gate (14) umfassen, das an einem ersten Eingang das Trägersignal (CK1) und an einem zweiten Eingang das invertierte versetzte Trägersignal (/SCK1) empfängt.

6. Schaltung nach einem der Ansprüche 2 bis 5, wobei die Mittel zum Ausgeben eines zu codierenden synchronisierten Signals (S1) ein Daten-Flip-Flop (21) umfassen, welches das versetzte Trägersignal (SCK1) an seinem Zeiteingang (CLK) und das zu codierende Signal (Sᵢₙ) an seinem D-Eingang empfängt.

7. Schaltung nach einem der Ansprüche 3 bis 6, wobei die logischen Mittel zum Ausgeben des zusammengesetzten Signals (S2) ein EXCLUSIVE-OR-Gate (22) umfassen, das an einem ersten Eingang das versetzte Trägersignal (SCK1) und an einem zweiten Eingang das zu codierende synchronisierte Signal (S1) empfängt.

8. Schaltung nach einem der Ansprüche 3 bis 7, wobei die Mittel zum Abtasten des zusammengesetzten Trägersignals (S2) ein Daten-Flip-Flop umfassen, welches das Abtastsignal (CK2) an seinem Zeiteingang (CLK) und das zusammengesetzte Trägersignal (S2) an seinem D-Eingang empfängt.

9. Berührungslos arbeitende Mikroschaltung (IC) mit einer Antennenspule (Lp) und Schaltmitteln (Tc), um die Last der Antennenspule zu modulieren, **dadurch gekennzeichnet, dass** die Schaltmittel (Tc) über den Ausgang einer Codierschaltung (10) nach einem der vorangehenden Ansprüche angesteuert werden.

10. Tragbarer, elektronischer Gegenstand mit einer Mikroschalturig (IC) nach Anspruch 9.
